(19) Europäisches Patentamt
European Patent Office
Office européen des brevets

(11) EP 3 257 616 A1

(12) EUROPÄISCHE PATENTANMELDUNG

(43) Veröffentlichungstag:
20.12.2017 Patentblatt 2017/51

(51) Int Cl.:
B23K 26/70 (2014.01)    B23K 26/142 (2014.01)

(21) Anmeldenummer: 16175155.7

(22) Anmeldetag: 18.06.2016

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
MA MD

(71) Anmelder: WSoptics GmbH
86972 Altenstadt (DE)

(72) Erfinder:
• Sepp, Florian
  86972 Altenstadt (DE)
• Weiss, Christoph
  86971 Peiting (DE)

(74) Vertreter: Gebauer, Dieter Edmund
Splanemann
Patentanwälte Partnerschaft
Rumfordstraße 7
80469 München (DE)

(54) LASERBEARBEITUNGSKOPF MIT GEKÜHLTEN OPTISCHEN KOMPONENTEN UND VERFAHREN ZUM BETREIBEN EINES LASERBEARBEITUNGSKOPFES

(57) Die Erfindung betrifft einen Laserbearbeitungskopf zur trennenden und/oder fügenden Bearbeitung von Werkstücken mittels eines Laserstrahls (5), umfassend eine Düsenanordnung mit einer Düse zum Abgeben des Laserstrahls, eine Strahlführung zum Führen des Laserstrahls zur Düse, wobei die Strahlführung mindestens ein optisches Bauteil zur Transmission (12) und/oder Reflexion (13) des Laserstrahls (5) aufweist, eine Gasführung (29) zum Führen eines Gasstroms (23) zur Düsenanordnung, wobei die Düsenanordnung so ausgebildet ist, dass der Gasstrom (23) in die Düsenanordnung eingeleitet wird, und mindestens eine Kühleinrichtung (15), die an die Gasführung (23) gasleitend angeschlossen ist und mindestens eine Drossel (20) zur Drosselung des Gasstroms (23) aufweist, wobei die Kühleinrichtung (15) so ausgebildet ist, dass das mindestens eine optische Bauteil (12,13) durch den gedrosselten Gasstrom (23) kühlbar ist.

FIG. 4

## Beschreibung

Die Erfindung betrifft einen Laserbearbeitungskopf zur trennenden und/oder fügenden (thermischen) Bearbeitung von Werkstücken sowie ein Verfahren zum Betreiben eines Laserbearbeitungskopfes.

Im Handel verfügbare Laserbearbeitungsmaschinen ermöglichen eine automatisierte Fertigung von Werkstückteilen in großer Stückzahl und mit hoher Präzision. Hierbei wird ein Laserbearbeitungskopf maschinengesteuert relativ zu einer Arbeitsfläche verfahren, um Schnittfugen zum Ausschneiden von Werkstückteilen aus einem Werkstück oder Schweißnähte zum Fügen von Werkstückteilen zu erzeugen. In der Regel enthält der Laserbearbeitungskopf eine Strahlführung mit optischen Bauteilen, wie Fenster, Linsen und Spiegel, um den Laserstrahl in gewünschter Weise auf eine Werkstückoberflächezufokussieren. Die optischen Bauteile sind grundsätzlich anfällig für Verschmutzungen, vor allem durch Partikel, die beim Schweiß- oder Schneidprozess entstehen, was zur Folge hat, dass sich die optischen Bauteile, abhängig vom Verschmutzungsgrad, durch eine Absorption des transmittierten oder reflektierten Laserstrahls erwärmen. Die Erwärmung eines optischen Bauteils führt zu dessen thermischen Ausdehnung bzw. Deformation, wodurch sich in unerwünschter Weise die optischen Eigenschaften des optischen Bauteils verändern können. Insbesondere kann sich hierdurch die Fokuslage des Laserstrahls ändern, was zu einer Verminderung der Produktqualität und einem erhöhtem Ausschuß führen kann.

Um dieses Problem zu vermeiden, ist es bekannt, in einem Laserschweißkopf ein so genanntes gasdynamisches Fenster vorzusehen, bei dem ein Gasstrahl ("Crossjet") quer zum Laserstrahl in die Düsenanordnung, beispielsweise in die den Laserstrahl abgebende Düse, eingeleitet wird, um in die Düsenanordnung eintretende Partikel durch eine seitliche Öffnung der Düsenanordnung zu befördern. Zudem werden die optischen Bauteile einer aktiven Wasserkühlung unterzogen, wobei beispielsweise die Rückseite von Spiegeln vollflächig gekühlt wird. Transmissive optische Elemente, wie Linsen oder Fenster, können nur im Randbereich gekühlt werden.

Obgleich durch die im Stand der Technik bekannten Maßnahmen eine befriedigende Lösung des geschilderten Problems bei Laserschweißköpfen erreicht werden kann, ist nachteilig, dass viele verschiedene fluide Medien im Laserschweißkopf eingesetzt werden müssen. So ist für den Crossjet eine Gasspeisung (z.B. Druckluft) und für die Kühlung der optischen Bauteile eine separate Kühlwasserspeisung vorzusehen. Zudem ist ein Laserbearbeitungskopf typischer Weise mit einem Schutzgas bzw. einer Reingasatmosphäre (z.B. He, Ar, N₂) zu versorgen. Durch die relativ große Anzahl der verschiedenen fluiden Medien erhöhen sich in unerwünschter Weise die Komplexität, der benötigte Bauraum sowie die Herstell- und Betriebskosten des Laserschweißkopfs. Zudem ist dessen Ausfallwahrscheinlichkeit erhöht.

Demgegenüber besteht die Aufgabe der vorliegenden Erfindung darin, herkömmliche Laserbearbeitungsköpfe so weiterzubilden, dass die vorstehend genannten Nachteile vermieden oder zumindest vermindert werden können. Diese und weitere Aufgaben werden nach dem Vorschlag der Erfindung durch einen Laserbearbeitungskopf und ein Verfahren zum Betreiben eines Laserbearbeitungskopfes mit den Merkmalen der nebengeordneten Patentansprüche gelöst. Vorteilhafte Ausgestaltungen der Erfindung sind durch die Merkmale der Unteransprüche angegeben.

Erfindungsgemäß ist ein Laserbearbeitungskopf zur trennenden und/oder fügenden (thermischen) Bearbeitung von Werkstücken mittels eines Laserstrahls gezeigt. Der Laserbearbeitungskopf kann als Laserschneidkopf und/oder Laserschweißkopf ausgebildet sein. Der Laserbearbeitungskopf umfasst eine Düsenanordnung, welche eine endständige Düse zum Abgeben des Laserstrahls durch eine Düsenöffnung umfasst.

Wie hier und im Weiteren verwendet, bezeichnet der Begriff "Düsenanordnung" einen Endabschnitt des Laserbearbeitungskopfes,dersich,bezogen aufdie Strahlrichtung desLaserstrahls, an das letzte fokussierende Elemente (z.B. Fokussierlinse oder Spiegel) für den Laserstrahl vor Austritt des Laserstrahls aus der Düse unmittelbar anschließt und bis zur endständigen Düse mit der Düsenöffnung zum Ausritt des Laserstrahls reicht. Die Düsenanordnung kann identisch mit der so genannten "unteren Strahlführung" sein, wenn durch das letzte fokussierende Element in Strahlrichtung des Laserstrahls eine Partikelsperre gebildet wird. Wird die Partikelsperre durch ein gasdynamisches Fenster gebildet, beginnt ab dem gasdynamischen Fenster die untere Strahlführung. Typischer Weise verfügt die Düsenanordnung über ein so genanntes Düsenrohr, d.h. einen Abschnitt des Laserbearbeitungskopfes, dem sich die endständige Düse anschließt. Das Düsenrohr kann insbesondere zur Düse hin konisch zulaufend ausgebildet sein.

Eine Laserstrahlführungseinrichtung, im Weiteren als "Strahlführung" bezeichnet, dient zum Führen des Laserstrahls zur Düse. Die Strahlführung verfügt zu diesem Zweck über mindestens ein optisches Bauteil, beispielsweise ein Transmissionsfenster, einen Spiegel oder eine Linse, zur Transmission und/oder Reflexion des Laserstrahls. Der Laserstrahl wird gewöhnlich von einer externen Laserstrahlquelle erzeugt und dem Laserbearbeitungskopf zugeführt.

Des Weiteren umfasst der Laserbearbeitungskopf eine Gasstromführungseinrichtung, im Weiteren als "Gasführung" bezeichnet, zum Führen eines (Arbeits-)Gasstroms zur Düsenanordnung. Der Gasstrom wird gewöhnlich von einer externen Gasstromquelle erzeugt und dem Laserbearbeitungskopf zugeführt. Der Gasstrom weist eingangs, d.h. insbesondere beim Zuführen zum Laserbearbeitungskopf, einen Überdruck relativ zu Umgebungsdruck auf, welcher typischer Weise im Bereich ein- oder zweistelliger Werte der Druckeinheit bar liegt. Die Gasführung ist so ausgebildet, dass der Gasstrom in die Düsenanordnung eingeleitet wird. Die Düsenanordnung kann zu diesem Zweck mindestens einen Gaseinlass beispielsweis am Düsenrohr oder der Düse aufweisen.

Bei einem Laserschneidkopf wird der Gasstrom in die Düsenanordnung eingeleitet und typischer Weise, jedoch nicht zwingend, aus derselben Düse wie der Laserstrahl abgegeben, vorzugsweise koaxial zum Laserstrahl. Der Gasstrom dient als Schnittfugengas zum Entfernen von Schmelzgut aus der Schnittfuge. Bei einem Laserschweißkopf wird der Gasstrom in die Düsenanordnung eingeleitet und strömt als "Crossjet" quer bzw. schräg zum Laserstrahl, um insbesondere beim Schweißvorgang entstehende Partikel (Schmutz und Spritzer) durch eine seitliche Öffnung der Düsenanordnung zu entfernen. Als (Arbeits-)Gas zur Verwendung als Schnittfugengas bzw. Cross jet kann im Grunde jedes inerte Gas oder Gasgemisch eingesetzt werden, beispielsweise Helium (He), Argon (Ar) oder Stickstoff ($N_2$). Denkbar ist jedoch auch die Verwendung eines reaktives Gases wie Sauerstoff ($O_2$) oder die Verwendung von Druckluft.

Der erfindungsgemäße Laserbearbeitungskopf umfasst weiterhin mindestens eine Kühleinrichtung, die an die Gasführung gasleitend angeschlossen ist.

Hier und im Weiteren wird unter dem Begriff "gasleitend" eine strömungstechnische bzw. fluidische (fluidisch-leitende) Verbindung verstanden.

Die Kühleinrichtung weist zudem mindestens eine (Gas-)Drossel (Expansionsstufe) zur Drosselung des Gasstroms auf, wobei die Kühleinrichtung so ausgebildet ist, dass das mindestens eine optische Bauteil durch den gedrosselten Gasstrom (aktiv) kühlbar ist. Grundsätzlich ist es möglich, dass eine Mehrzahl optischer Bauteile durch eine einzige Kühleinrichtung gekühlt werden, wobei es im Hinblick auf die Kühlwirkung vorteilhaft und erfindungsgemäß bevorzugt ist, wenn jedes optische Bauteil über eine an die Gasführung gasleitend angeschlossene, separate Kühleinrichtung verfügt, die vorzugsweise am optischen Bauteil angeordnet ist und insbesondere eine bauliche Einheit mit dem optischen Bauteil bilden kann.

Wesentlich für eine ausreichende Kühlwirkung ist eine (hinreichende) Drosselung des Gasstroms, da, wie Versuche der Erfinder gezeigt haben, die Kühlwirkung ohne eine Expansion des Gases (d.h. durch eine reine Temperaturzunahme des Gases) für eine hinreichende Kühlung eines optischen Bauteils in aller Regel nicht ausreicht. Hierbei wird die Erkenntnis genutzt, dass nach der allgemeinen Gasgleichung

$$P \ * \ V \ = \ m \ * \ Rs \ * \ T$$

(p= Druck, V= Volumen, Rs= Gaskonstante (spezifisch), m= Masse, T= Temperatur in °K)
und unter der Annahme, dass der Volumenstrom und die Masse, sowie die Gaskonstante gleich bleiben, sich für eine Expansionsstufe (Drosselung) eine Temperaturabnahme des Gases ergibt, entsprechend der Gleichung:

$$T2 \ = \ T1 \ * \ p2 \ / \ p1$$

Dies heißt, dass die Gastemperatur T2 nach Drosselung gleich ist zur Gastemperatur T1 vor Drosselung, multipliziert mit dem Verhältnis des Gasdrucks nach Drosselung p2 zu dem Gasdruck p1 vor Drosselung. Somit kann in einfacher Weise über das Druckverhältnis, welches sich aus der Drosselung des Gases an einer Expansionsstufe ergibt, die Gastemperatur gezielt eingestellt werden. Die Kühlleistung am optischen Element kann folglich über den Massenstrom von Gas und dem jeweiligen Druckverlust pro Expansionsstufe gezielt eingestellt werden. Optische Bauteile können somit durch den Gasstrom zuverlässig und sicher gekühlt werden, solange eine hinreichende Drosselung (Expansion) des Gases an der Expansionsstufe stattfindet.

Erfindungsgemäß erfolgt an der Drossel einer Kühleinrichtung eine solche Expansion bzw. (Teil-)Entspannung des Gases, dass eine Kühlung eines optischen Bauteils durch den gedrosselten Gasstrom ermöglicht ist. Beispielsweise ist die Drossel so ausgebildet, dass eine minimale Druckänderung des Gases an der Drossel im Bereich von 0,01 bis 5 bar, insbesondere 0,1 bis 3 bar, insbesondere 0,1 bis 2 bar, liegt.

Ein besonderer Vorteil der Erfindung ist darin zu sehen, dass der zur Verwendung als Schnittfugengas zum Entfernen der Schlacke aus der Schnittfuge bzw. als Crossjet ohnehin vorhandene Gasstrom hinreichend gedrosselt und zur aktiven Kühlung mindestens eines optischen Bauteils der Strahlführung genutzt wird. Durch diese Maßnahme kann in vorteilhafter Weise die Anzahl der fluiden Medien im Laserbearbeitungskopf reduziert werden, wodurch die Komplexität, der benötigte Bauraum sowie die Herstell- und Betriebskosten vermindert werden. Zudem verringert sich die Ausfallwahrscheinlichkeit des Laserbearbeitungskopfes.

Denkbar ist es, dass der Gasstrom in zwei oder mehr Teilgasströme aufgeteilt wird, wobei einer Kühleinrichtung jeweils ein Teilgasstrom und der Düsenanordnung ein weiterer Teilgasstrom unabhängig voneinander (parallel) zugeleitet werden. Die genannten Vorteile der Erfindung können bereits hierdurch erreicht werden.

Erfindungsgemäß bevorzugt ist eine alternative Ausgestaltung des Laserbearbeitungskopfes, bei der mindestens eine Kühleinrichtung und die Düsenanordnung (z.B. mindestens ein Gaseinlass der Düsenanordnung) in Serie gasleitend miteinander verbunden sind, wobei die mindestens eine Kühleinrichtung stromaufwärts der Düsenanordnung (bzw. des mindestens eines Gaseinlasses der Düsenanordnung) angeordnet ist. Demnach wird derselbe Gasstrom zunächst der mindestens einen Kühleinrichtung zugeleitet, dort gedrosselt und zur Kühlung mindestens eines optischen Bauteils eingesetzt, und anschließend der Düsenanordnung zugeführt. Bei einer Mehrzahl an die Gasführung gasleitend angeschlossener Kühleinrichtungen ist es vorteilhaft, wenn auch die Kühleinrichtungen gasleitend in Serie miteinander verbunden sind, wobei derselbe Gasstrom sukzessive den Kühleinrichtungen zugeleitet, dort jeweils gedrosselt und zur Kühlung der den Kühleinrichtungen jeweils zugeordneten optischen Bauteile eingesetzt wird. Die gasleitend serienverschalteten Kühleinrichtungen sind zudem vorteilhaft mit der Düsenanordnung gasleitend serienverschaltet und stromaufwärts der Düsenanordnung angeordnet, wobei derselbe Gasstrom, der sukzessive den Kühleinrichtungen zugeleitet wurde, anschließend in die Düsenanordnung eingeleitet wird.

Wesentlich bei der gasleitenden Serienverschaltung von Kühleinrichtung(en) und Düsenanordnung ist es, dass an jeder nicht endständigen Expansionsstufe keine vollständige Entspannung, des Gases gegenüber Umgebungsdruck, sondern lediglich eine Teilentspannung erfolgt. In dem endständigen Bauteil der gasleitenden Serienverschaltung, d.h. in der Düsenanordnung, kann schließlich eine vollständige Entspannung des Gases gegenüber Umgebungsdruck erfolgen. Um eine ausreichende Kühlwirkung an den optischen Bauteilen und eine genügende Wirkung als Schnittfugengasbzw. Crossjet zu erreichen, muss der Gasstrom mit einem Überdruck gegenüber Umgebungsdruck in die Düsenanordnung eingeleitet werden, zum welchem Zweck der Gasstrom beim Eintritt in die Serienverschaltung hinreichend druckbeaufschlagt sein muss. Durch die Serienverschaltung von Kühleinrichtung(en) und Düsenanordnung kann in besonders einfacher und kostengünstiger Weise eine zuverlässige und sichere Kühlung der optischen Bauteile erreicht werden. Die Komplexität, der benötigte Bauraum sowie die Herstell- und Betriebskosten des Laserbearbeitungskopfes können durch die Serienverschaltung in besonders vorteilhafter Weise noch weiter vermindert werden.

Die mindestens eine Kühleinrichtung kann grundsätzlich wahlfrei ausgestaltet sein, solange eine hinreichende Kühlwirkung mindestens einen optischen Bauteils gewährleistet ist. Bei einer vorteilhaften Ausgestaltung des erfindungsgemäßen Laserbearbeitungskopfs ist mindestens eine Kühleinrichtung so ausgebildet, dass der gedrosselte Gasstrom mindestens eine Oberfläche eines optischen Bauteils direkt und/ oder indirekt anströmt. Eine Umlenkung des gedrosselten Gasstroms, bevor er auf die Oberfläche des optischen Bauteils trifft, ist bei einer indirekten Anströmung möglich. Bei der Oberfläche des optischen Bauteils kann es sich beispielsweise um die rückseitige Oberfläche eines Spiegels zur Reflexion des Laserstrahls handeln. Hierdurch kann eine gute Kühlwirkung zur Kühlung des optischen Bauteils erreicht werden.

Vorteilhaft kann es auch sein, wenn mindestens eine Kühleinrichtung so ausgebildet ist, dass der gedrosselte Gasstrom mindestens einen mit einem optischen Bauteil wärmeleitend verbundenen Kühlkörper direkt und/oder indirekt anströmt. Eine Umlenkung des gedrosselten Gasstroms, bevor er auf die Oberfläche des Kühlkörpers trifft, ist bei einer indirekten Anströmung möglich. Bei der Oberfläche des optischen Bauteils, welche mit mindestens einem Kühlkörper wärmeleitend verbunden ist, kann es sich beispielsweise um die rückseitige Oberfläche eines Spiegels zur Reflexion des Laserstrahls handeln. Auch hierdurch kann eine gute Kühlwirkung zur Kühlung des optischen Bauteils erreicht werden.

Generell ist es vorteilhaft, wenn die Oberfläche des optischen Bauteils bzw. des mindestens einen Kühlkörpers von dem gedrosselten Gasstrom schräg (d.h. nicht senkrecht bzw. in einem Winkel von 90° zur Oberfläche) angeströmt wird, so dass die Bildung einer relativ wenig bewegten Gasmenge über der Oberfläche ("Totwasser"), die in unerwünschter Weise zu einer Verminderung der Kühlwirkung führen kann, vermieden wird.

Vorteilhaft kann es auch sein, wenn der mindestens eine Kühlkörper aus einem Material besteht, das eine größere Wärmeleitfähigkeit hat, als ein Material der übrigen Kühleinrichtung. Beispielsweise besteht der mindestens eine Kühlkörper aus einem metallischen Material und die übrige Kühleinrichtung aus einem nicht-metallischen Material, beispielsweise Kunststoff. Hierdurch kann die Kühlwirkung für das optische Bauteil noch weiter verbessert werden.

Bei einer besonders vorteilhaften Ausgestaltung des erfindungsgemäßen Laserbearbeitungskopfes weist mindestens eine Kühleinrichtung mindestens eine Expansions kammer zum Aufnehmen des gedrosselten Gasstroms auf, wobei zumindest ein Abschnitt einer Wandung der Expansionskammer durch eine Oberfläche eines optischen Bauteils und/oder eines mit dem optischen Bauteil wärmeleitend verbundenen Kühlkörpers gebildet wird. Eine solche Ausbildung der Kühleinrichtung ist besonders geeignet zur Kühlung einesreflektivenoptischen Bauteils für den Laserstrahl, beispielsweise ein Spiegel.

Bei einer weiteren, besonders vorteilhaften Ausgestaltung des erfindungsgemäßen Laserbearbeitungskopfes weist mindestens eine Kühleinrichtung mindestens eine Expansionskammer zum Aufnehmen des gedrosselten Gasstroms auf, wobei zumindest ein Abschnitt einer Wandung der Expansionskammer mit mindestens einer Oberfläche eines optischen Bauteils wärmeleitend verbunden ist. Vorteilhaft weist die Wandung der Expansionskammer zu diesem Zweck einen Abschnitt auf, der mit einem Randbereich des optischen Bauteils direkten oder indirekten Berührungskontakt hat. Im Hinblick auf die Kühlwirkung ist es besonders vorteilhaft, wenn die Wandung der Expansionskammer eine Einsenkung aufweist, welche einen Randbereich des optischen Bauteils in direktem Berührungskontakt oder in indirektem Berührungskontakt an zwei einander gegenüberliegenden Oberflächen des optischen Bauteils umgreift. Bei einem indirekten Berührungskontakt befindet sich ein relativ gutwärmeleitendes Material zwischen der Wandung der Expansionskammer und der Oberfläche des optischen Bauteils, beispielsweise ein metallisches Materials. Hierdurch kann eine besonders effiziente Kühlung des optischen Bauteils erreicht werden.

Generell ist es zum Zwecke der Kühlung von optischen Bauteilen, insbesondere von transmissiven optischen Bauteilen, vorteilhaft, wenn die zugehörige Kühleinrichtung so ausgebildet ist, dass das optische Bauteil an zwei einander gegenüberliegenden Oberflächen kühlbar ist. In der Regel besitzen transmissive optische Elemente eine schlechte Wärmeleiteigenschaft. Dieser Nachteil wird durch eine relativ große kühlbare Fläche kompensiert.

Eine besonders gute Kühlung eines optischen Bauteils kann erreicht werden, wenn für die beiden einander gegenüberliegenden Oberflächen des optischen Bauteils jeweils eine separate Expansionskammer vorgesehen ist. Die Kühleinrichtung umfasst in diesem Fall zwei voneinander getrennte Expansionskammern, die jeweils über mindestens eine eigene Drossel zur Drosselung des Gasstroms verfügen. Hierbei sind die beiden Expansionskammern so ausgebildet, dass die eine (erste) Expansionskammer ausschließlich (oder zumindest überwiegend) für eine Kühlung der einen (ersten) Oberfläche und die andere (zweite) Expansionskammer ausschließlich (oder zumindest überwiegend) für eine Kühlung der anderen (zweiten) Oberfläche des optischen Bauteils dienen. Eine solche Ausbildung der Kühleinrichtung ist besonders geeignet zur Kühlung eines transmissiven optischen Bauteils für den Laserstrahl, beispielsweise eine Linse oder ein Transmissionsfenster.

Bei den vorstehenden Ausgestaltungen, bei denen die Kühleinrichtung über eine Expansionskammer verfügt, ist es vorteilhaft, wenn die Expansionskammer mindestens einen Gaseinlass zum Einleiten des Gasstroms in die Expansionskammer und mindestens einen Gasauslass zum Ausleiten des Gasstroms aus der Expansionskammer aufweist, wobei mindestens eine Drossel so angeordnet ist, dass der gedrosselte Gasstrom unmittelbar bzw. direkt in die Expansionskammer expandieren kann. Vorzugsweise ist zu diesem Zweck mindestens eine Drossel im Gaseinlass so angeordnet, dass die Drossel in die Expansionskammer mündet.

Die Erfindung erstreckt sich weiterhin auf eine Laserbearbeitungsmaschine, insbesondere eine Laserschneidmaschine oder eine Laserschweißmaschine, mit einer Laserstrahlquelle zur Erzeugung eines Laserstrahls und einer Gasstrahlquelle zur Erzeugung eines Gasstroms, welche über wie oben beschriebenen ausgebildeten Laserbearbeitungskopf verfügt.

Ferner erstreckt sich die Erfindung auf ein Verfahren zum Betreiben eines Laserbearbeitungskopfes zur trennenden oder fügenden (thermischen) Bearbeitung von Werkstücken mittels eines Laserstrahls. Der Laserbearbeitungskopf kann insbesondere wie oben beschrieben ausgebildet sein.

Das Verfahren umfasst die folgenden (vorteilhaft, jedoch nicht zwingend sukzessiven) Schritte:

- Erzeugen des Laserstrahls,
- Führen des Laserstrahls mittels einer Strahlführung, die mindestens ein optisches Bauteil zur Transmission und/oder Reflexion des Laserstrahls aufweist, zu einer Düse zum Abgeben des Laserstrahls,

- Erzeugen eines Gasstroms,
- Drosseln des Gasstroms und Kühlen mindestens eines optischen Bauteils durch den gedrosselten Gasstrom,
- Einleiten des Gasstroms in die Düsenanordnung.

Bei einer Mehrzahl optischer Bauteile ist es vorteilhaft, wenn jedes optische Bauteil durch einen separat gedrosselten Gasstrom gekühlt wird. Dies heißt, dass der an einem optischen Bauteil gedrosselte Gasstrom an einem oder mehreren weiteren optischen Bauteilen zu deren Kühlung jeweils wieder gedrosselt wird. Besonders vorteilhaft wird der zur Kühlung von einem oder mehreren Bauteilen ein-oder mehrmals gedrosselte Gasstrom nach Kühlung der optischen Bauteile in die Düsenanordnung eingeleitet.

Vorteilhaft strömt der gedrosselte Gasstrom eine Oberfläche eines optischen Bauteils, und/oder mindestens einen mit einem optischen Bauteil wärmeleitend verbundenen Kühlkörper zur Kühlung des optischen Bauteils, insbesondere schräg, direkt oder indirekt an.

Des Weiteren erstreckt sich die Erfindung auf die Verwendung eines Gasstroms, der zum Einleiten in eine Düsenanordnung eines Laserbearbeitungskopfes zur trennenden oder fügenden Bearbeitung von Werkstücken mittels Laserstrahl vorgesehen ist, zur Kühlung mindestens eines optischen Bauteils zur Führung des Laserstrahls.

Es versteht sich, daß die vorstehend genannten Ausgestaltungen der Erfindung in Alleinstellung oder in beliebigen Kombinationen einsetzbar sind, ohne den Rahmen der vorliegenden Erfindung zu verlassen.

Kurze Beschreibung der Zeichnungen

Die Erfindung wird nun anhand von Ausführungsbeispielen näher erläutert, wobei Bezug auf die beigefügten Figuren genommen wird. In den Figuren sind gleiche bzw. gleich wirkende Elemente jeweils mit denselben Bezugszeichen benannt. Es zeigen:

Fig. 1    eine perspektivische Darstellung eines Ausführungsbeispiels für einen erfindungsgemäßen Laserbearbeitungskopf;

Fig. 2    eine schematische Schnittdarstellung des Laserbearbeitungskopfes von Fig. 1;

Fig. 3   eine vergrößerteschematische Schnittdarstellung der Düse des Laserbearbeitungskopfes von Fig. 1;

Fig. 4   eine schematische Darstellung zur Veranschaulichung der Gasführung des Laserbearbeitungskopfes von Fig. 1;

Fig. 5   eine schematische Darstellung zur Veranschaulichung der Verminderung des Gasdrucks in verschiedenen Expansionsstufen;

Fig. 6   eine vergrößerte schematische Schnittdarstellung einer Kühleinrichtung an einem Spiegel;

Fig. 7   eine schematische Schnittdarstellung der Kühleinrichtung an einer Fokussierlinse eines Laserschneidkopfes;

Fig. 8   schematische Darstellungen zur Veranschaulichung eines Ausführungsbeispiels einer Kühleinrichtung an einem Spiegel;

Fig. 9   eine schematische Darstellung zur Veranschaulichung eines weiteren Ausführungsbeispiels einer Kühleinrichtung an einem Spiegel. Ausführliche Beschreibung der Zeichnungen

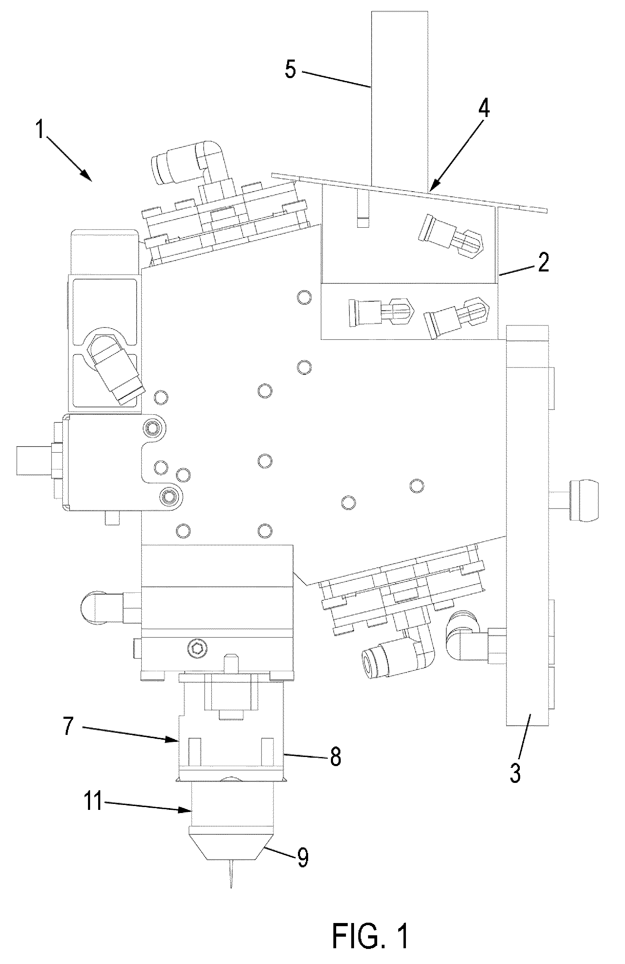

Sei zunächst Figur 1 betrachtet, worin ein Ausführungsbeispiel eines erfindungsgemäßen Laserbearbeitungskopfes anhand einer perspektivischen Darstellung veranschaulicht ist. Der insgesamt mit der Bezugszahl 1 bezeichnete Laserbearbeitungskopf, bei welchem es sich hier beispielsweise um einen Laserschweißkopf handelt, umfaßt ein Gehäuse 2 und eine daran montierte Halterung 3 zur Befestigung des Laserbearbeitungskopfes 1 an einem nicht dargestellten Führungsschlitten. Typischer Weise ist der Führungsschlitten an einem Träger befestigt und kann längs des Trägers in einer ersten Achsrichtung verfahren werden, wobei der Träger selbst in einer hierzu senkrechten zweiten Achsrichtung verfahrbar ist, so dass der Laserbearbeitungskopf 1 in einer horizontalen Ebene über einer Werkstückauflage verfahren werden kann. Gewöhnlich kann der Führungsschlitten noch in einer dritten Achsrichtung vertikal verfahren werden, wodurch der Abstand zur Werkstückauflage veränderbar ist.

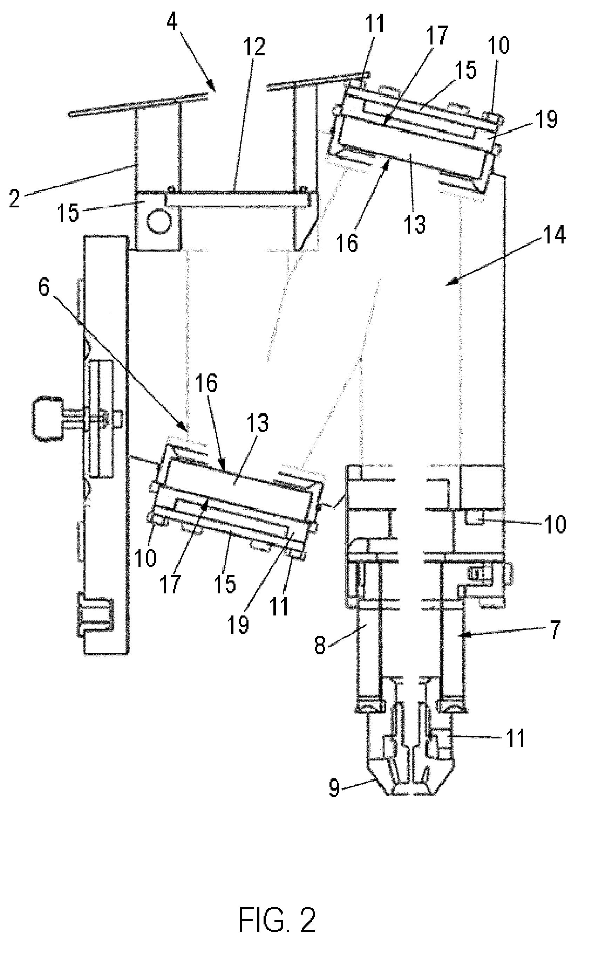

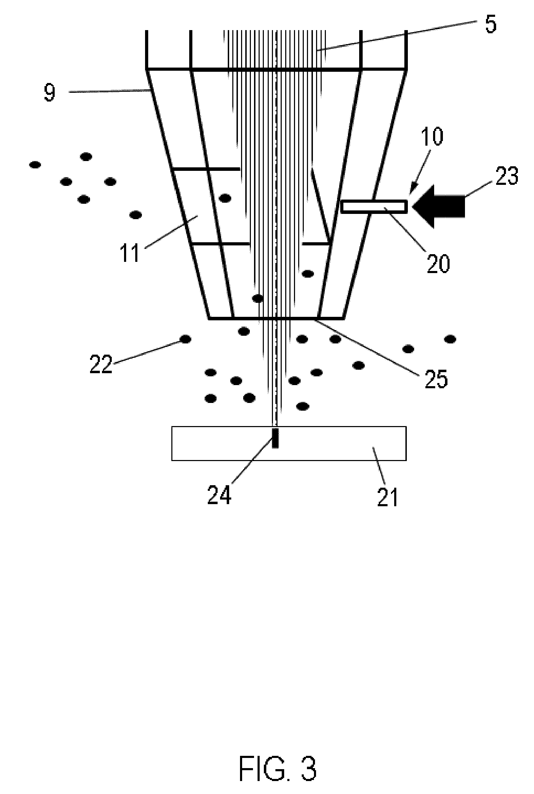

Das Gehäuse 2 weist eine Eintrittsöffnung 4 (siehe Fig. 2) auf, durch die ein Laserstrahl 5 in den Laserbearbeitungskopf 1 eintreten kann. Innerhalb des Gehäuses 2 befindet sich eine Strahlführung 6 (siehe Fig. 2), durch die der Laserstrahl 5 zu einer Düsenanordnung 7 geführt wird. Die Düsenanordnung 7 umfasst ein Düsenrohr 8 und eine sich hieran anschließende, endständige Düse 9 mit einer Düsenöffnung 25 (siehe Fig. 3), durch die der Laserstrahl 5 nach außen, beispielsweise in Richtung der Werkstückauflage, abgegeben wird. Der Laserstrahl 5 wird durch eine externe Laserstrahlquelle erzeugt.

Es wird nun Bezug auf Figur 2 genommen, worin eine schematische Längsschnittdarstellung des Laserbearbeitungskopfes 1 von Fig. 1 gezeigt ist. Demnach verfügt die Strahlführung 6 über eine Mehrzahl optischer Elemente zur Transmission bzw. Reflexion des Laserstrahls 5. So weist die Strahlführung 6 ein Transmissionsfenster 12, welches der Laserstrahl 5 nach Eintritt in den Laserbearbeitungskopf 1 durch die Eintrittsöffnung 4 passiert, und zwei Spiegel 13, durch die der Laserstrahl 5 jeweils umgelenkt wird, auf. Die beiden Spiegel 13 sind in Gegenüberstellung seitlich zueinander versetzt angeordnet. Der Strahlengang 14 des Laserstrahls 5, in dem der Laserstrahl 5 in Richtung auf die Düsenöffnung 25 zweimal seine Strahlrichtung ändert, ist in Fig. 2 schematisch dargestellt. Der Laserstrahl 5 wird jeweils an einer vorderseitigen Oberfläche des Spiegels 13 bzw. Vorderfläche 16 reflektiert. Der Vorderfläche 16 gegenüber liegt eine rückseitige Oberfläche des Spiegels 13 bzw. Rückfläche 17.

An der Düse 9 ist ein seitlicher Gasauslass 11 in Form einer Durchbrechung der Düsenwandung ausgespart, der Teil eines als Partikelsperre wirkenden gasdynamischen Fensters ist, durch das im Schweißprozess entstehende Partikel 22 (siehe Fig. 3) aus der Düsenanordnung 7 entfernt werden können. Die Düse 9 ist in Fig. 3 in einer vergrößerten Darstellung schematisch gezeigt. Dargestellt ist der fokussierte Laserstrahl 5, der durch eine Düsenöffnung 25 von der Düse 9 abgegeben wird, auf ein Werkstück 21 trifft und dort eine Schweißnaht 24 erzeugt. Durch den Schweißvorgang werden Partikel 22 hochgeschleudert, die durch die Düsenöffnung 25 in die Düse 9 eintreten können. Um zu vermeiden, dass sich die Partikel 22 im Innenraum des Gehäuses 2, insbesondere an den optischen Bauteilen der Strahlführung 6 (siehe Fig. 2) ablagern, wird ein Gasstrom 23 (in Fig. 3 schematisch durch einen Pfeil veranschaulicht) in der Düse 9 quer zur Austrittsrichtung des Laserstrahls 5 expandiert, um in die Düse 9 eingetretene Partikel 22 durch den seitlichen Gasauslass 11 der Düse 9 zu treiben. Der Gasstrom 23 wird zu diesem Zweck einer als Düse ausgeführten Drossel 20 zugeführt (in Fig. 3 lediglich schematisch dargestellt), durch die der Gasstrom 23 gegen Umgebungsdruck entspannt. Eine Zufuhr des mit Überdruck beaufschlagten Gasstroms 23 erfolgt an einem Gaseinlass 10 der Düsenanordnung 7, der in Fig. 2 gezeigt ist.

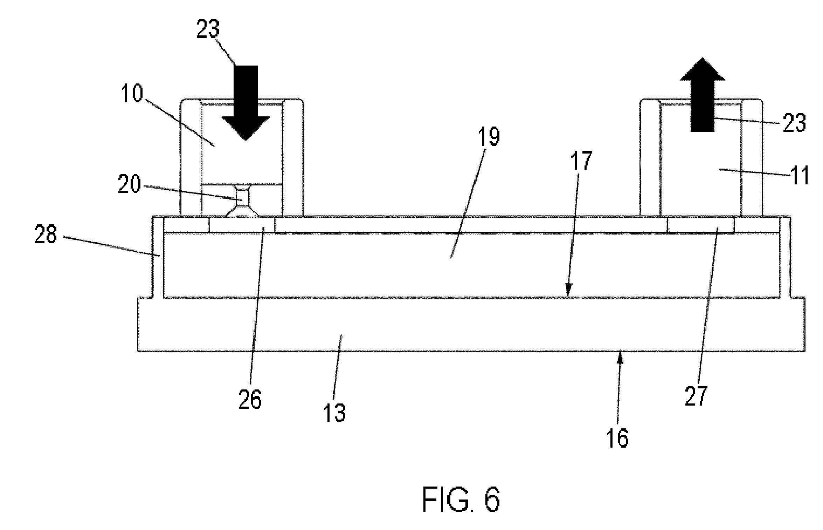

Das Transmissionsfenster 12 und die beiden Spiegel 13 können jeweils durch eine an den Gasstrom 23 angeschlossene Kühleinrichtung 15 aktiv gekühlt werden. Wie in Fig. 2 gezeigt, ist am Transmissionsfenster 12 und an den beiden Spiegeln 13 zu diesem Zweck jeweils ein separate Kühleinrichtung 15 angeordnet. Wie in Fig. 6 in einer vergrößerten schematischen Darstellung gezeigt, weist jede Kühleinrichtung 15 zur Kühlung eines Spiegels 13 eine Expansionskammer 19 auf. Die Expansionskammer 19 wird durch eine Wandung 28 umgrenzt, wobei die Rückfläche 17 des Spiegels 13 einen Bereich der Wandung 28 bildet und die Expansionskammer 19 mit begrenzt. Die Kühleinrichtung 15 verfügt ferner über einen Gaseinlass 10 zum Zuführen des Gasstroms 23 zur Expansionskammer 19 und einen Gasauslass 11 zum Abführen des Gasstroms 23 aus der Expansionskammer 19. Gaseinlass 10 und Gasauslass 11 sind hier beispielsweise jeweils in Form eines Rohrstutzens ausgebildet. Der Gaseinlass 10 befindet sich an einer in Form einer Durchbrechung der Wandung 28 gebildeten ersten Kammeröffnung 26. Entsprechend befindet sich der Gasauslass 11 an einer in Form einer Durchbrechung der Wandung 28 gebildeten zweiten Kammeröffnung 27. Im Gaseinlass 10 befindet sich eine Drossel 20 zur Drosselung des dem Gaseinlass 10 zugeführten Gasstroms 23. Die Drossel 20 mündet in die Expansionskammer 19, so dass der gedrosselte Gasstrom 23 direkt in die Expansionskammer 19 einströmen kann. Durch den Gasauslass 11 kann der Gasstrom 23 aus der Expansionskammer 19 ausströmen. Durch den gedrosselten Gasstrom 23 kann die Rückfläche 17 des Spiegels 13 effizient gekühlt werden.

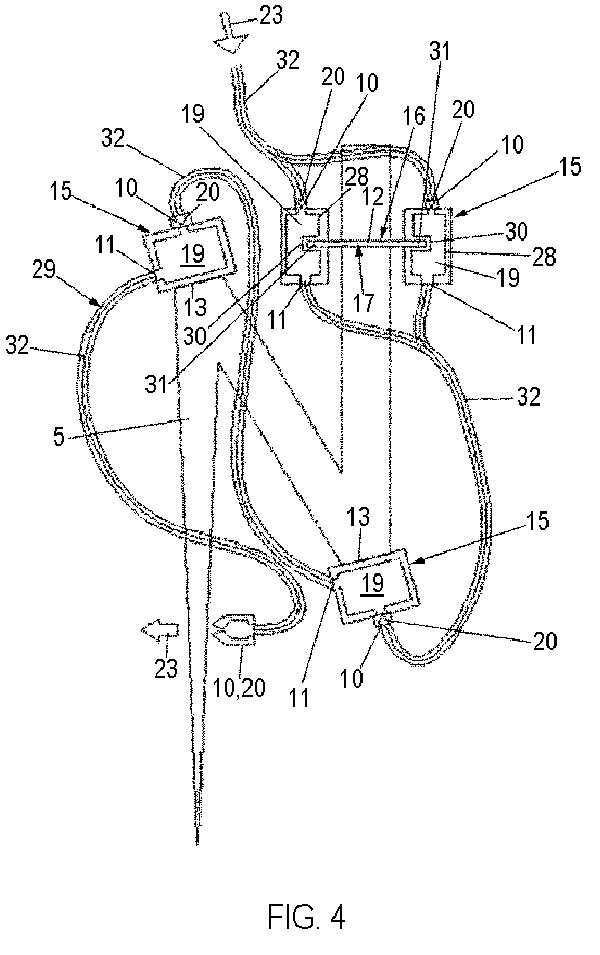

Die Kühleinrichtung 15 des Transmissionsfensters 12 basiert auf demselben Prinzip, ist jedoch etwas anders aufgebaut, worauf bei der Beschreibung von Fig. 4 näher eingegangen wird.

Die drei separaten Kühleinrichtungen 15 zur Kühlung des Transmissionsfensters 12 und der beiden Spiegel 13 sowie der Gaseinlass 10 des gasdynamischen Fensters der Düse 9 werden jeweils vom selben Gasstrom 23 gespeist und sind zu diesem Zweck gasleitend in Serie miteinander verbunden. Dies ist in Fig. 4 veranschaulicht, worin eine schematische Darstellung der insgesamt mit der Bezugszahl 29 bezeichneten Gasführung zur Führung des Gasstroms 23 des Laserbearbeitungskopfes 1 von Fig. 1 gezeigt ist. In Fig. 4 ist weiterhin die Kühleinrichtung 15 des Transmissionsfensters 12 näher dargestellt. Demnach weist diese eine ringförmige Expansionskammer 19 auf, deren Wandung 28 über eine innen umlaufende Einsenkung 30 verfügt, welche einen Randbereich 31 des Transmissionsfensters 12 umgreift. Obgleich dies in Fig. 4 nicht näher dargestellt ist, befindet sich ein gut wärmleitendes Material, beispielsweise ein metallisches Material, zwischen der Wandung 28 der Expansionskammer 19 und dem Transmissionsfenster 12, so dass die Expansionskammer 19 mit dem Transmissionsfenster 12 wärmeleitend verbunden ist. Die Wandung 28 umgreift eine Vorderfläche 16 und eine Rückfläche 17 des Transmissionsfensters 12, wodurch eine effiziente Kühlung des Transmissionsfensters 12 erreicht werden kann. Möglich wäre auch, dass die Wandung 28 der Expansionskammer 19 einen direkten Berührungskontakt mit der Vorderfläche 16 und Rückfläche 17 hat.

Die Kühleinrichtung 15 des Transmissionsfensters 12 weist zwei Gaseinlässe 10 zum Zuleiten des Gasstroms 23 in die Expansionskammer 19 und zwei Gasauslässe 11 zum Ausleiten des Gasstroms 23 aus der Expansionskammer 19 auf. Jeder Gaseinlass 10 ist mit einer separaten Drossel 20 zur Drosselung des Gasstroms 23 versehen, wobei jede Drossel 20 in die Expansionskammer 19 mündet, so dass der gedrosselte Gasstrom 23 in die Expansionskammer 19 direkt einströmen kann. Möglich wäre es, die Kühleinrichtung 15 des Transmissionsfensters 12 mit zwei voneinander getrennten Expansionskammern 19 zu versehen, die jeweils einen separaten Gaseinlass 10 mit Drossel 20 und einen separaten Gasauslass 11 aufweisen, wobei die eine Expansionskammer 19 ausschließlich in wärmeleitender Verbindung mit der Vorderfläche 16 (bzw. zumindest in stärkerer wärmeleitender Verbindung mit der Vorderfläche 16 als mit der Rückfläche 17) und die andere Expansionskammer 19 ausschließlich in wärmeleitender Verbindung mit der Rückfläche 16 (bzw. zumindest in stärkerer wärmeleitender Verbindung mit der Rückfläche 17 als mit der Vorderfläche 16) ist.

In Fig. 4 sind die Kühleinrichtungen 15 der Spiegel 13 gegenüber jenen von Fig. 2 und Fig. 6 geringfügig modifiziert, wobei Gaseinlass 10 und Gasauslass 11 jeweils an anderen Stellen der Wandung 28 der Expansionskammer 19 angeordnet sind. Wie in Fig. 4 erkennbar, umfasst die Gasführung 29 ein Gasleitungssystem mit Gasleitungen 32, welche die verschiedenen Kühleinrichtungen 15 von Transmissionsfenster 12 und Spiegel 13 sowie den Gaseinlass 10 des gasdynamischen Fensters der Düse 9 strömungstechnisch in Serie miteinander verbinden. Hierbei wird derselbe Gasstrom 23 sukzessive der Kühleinrichtung 15 des Transmissionsfensters 12, der Kühleinrichtung 15 des ersten Spiegels 13, der Kühleinrichtung 15 des zweiten Spiegels 13 und schließlich dem Gaseinlass 10 des gasdynamischen Fensters der Düse 9 zugeführt. In jedem Gaseinlass 10 der Kühleinrichtungen 15 sowie im Gaseinlass 10 des gasdynamischen Fensters der Düse 9 ist jeweils eine Drossel 20 zur Drosselung des Gasstroms 23 angeordnet, wobei der mit einem Überdruck relativ zur Umgebung in den Laserbearbeitungskopf 1 eingespeiste Gasstrom 23 an den stromaufwärts des Gaseinlasses 10 des gasdynamischen Fensters der Düse 9 befindlichen Drosseln 20 jeweils nur teilentspannt wird, so dass eine weitere Entspannung gegen Umgebungsdruck im Gaseinlass 10 des gasdynamischen Fensters der Düse 9 möglich ist.

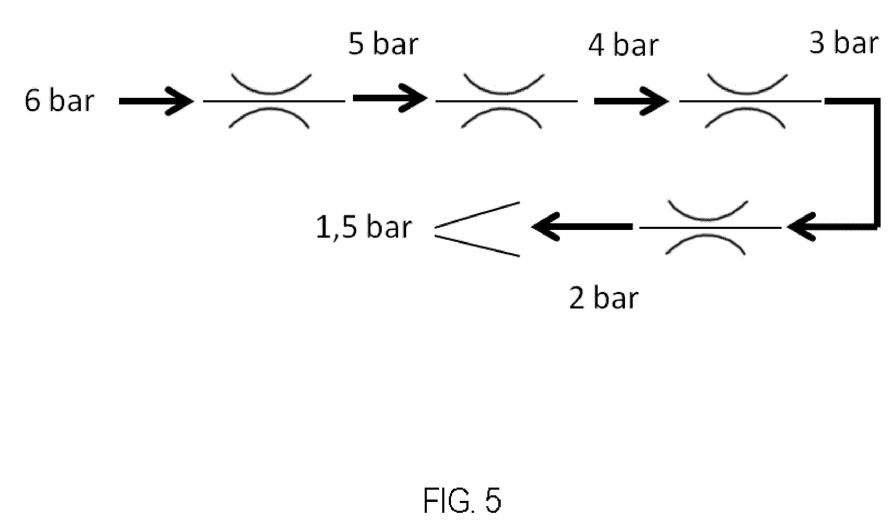

In Fig. 5 ist anhand einer schematischen Darstellung die sukzessive Verminderung des Gasdrucks in den Kühleinrichtungen einer Mehrzahl optischer Bauteile eines erfindungsgemäßen Laserbearbeitungskopfes in allgemeiner Weise veranschaulicht. Jede Kühleinrichtung entspricht einer Expansionsstufe des Gases, wobei der Gasstrom beispielsweise mit einem Eingangsdruck von 6 bar (Differenzdruck relativ zu Umgebungsdruck) der ersten Drossel (d.h. erste Expansionsstufe) zur Kühlung des ersten optischen Bauteils zugeführt wird, wobei eine Teilentspannung des Gases auf einen Gasdruck von beispielsweise 5 bar erfolgt. Anschließend wird derselbe (bereits gedrosselte) Gasstrom den weiteren Drosseln (d.h. weiteren Expansionsstufen) zur Kühlung weiterer optischer Bauteile zugeführt, wobei jeweils eine weitere Teilentspannung des Gases erfolgt, hier beispielsweise auf einen Gasdruck von 4 bar, 3 bar und 2 bar. Der Gasstrom wird dann dem Gaseinlass des gasdynamischen Fensters, der eine Düse (d.h. Drossel) aufweist, mit einem Überdruck von 2 bar gegenüber Umgebungsdruck zugeführt. An der Öffnung der Düse des gasdynamischen Fensters tritt der Gasstrom mit einem Überdruck von beispielsweise 1,5 bar gegenüber Umgebungsdruck aus, wodurch eine ausreichende Wirkung beispielsweise als Crossjet erreicht werden kann. Nach Austritt aus der Öffnung der Düse des gasdynamischen Fensters expandiert der Gasstrom bis er im Druckgleichgewicht mit Umgebungsdruck ist. In jeder Expansionsstufe wird der Gasstrom entsprechend der benötigen Kühlleistung zur Kühlung eines jeweiligen optischen Bauteils expandiert. Die Anzahl der Expansionsstufen entspricht in aller Regel der Anzahl der zu kühlenden optischen Bauteile, vermehrt um 1, entsprechend der letzten Drosselung bzw. Expansion des Gasstroms in der Düse als Crossjet bzw. Schnittfugengas. Die in Fig. 5 veranschaulichte sukzessive Teilentspannung des Gasstroms an den Drosseln der Kühleinrichtungen der optischen Bauteile und die anschließende Einleitung desselben Gasstroms in die Düse ist auch für die konkreten Ausführungsbeispiele der Erfindung anwendbar, wobei lediglich die Anzahl der Expansionsstufen und die jeweilige Druckminderung an den Drosseln in geeigneter Weise zu wählen sind.

Im Ausführungsbeispiel von Fig. 4 ist der Gasstrom analog zum Strahlengang 14 des Laserstrahls 15 geführt, wobei es grundsätzlich vorteilhaft ist, wenn optische Bauteile die eine höhere Kühlleistung benötigen, am Anfang der Expansionslinie stehen. Insofern kann die gasleitende Serienverschaltung der Kühleinrichtungen auch von der Strahlführung abweichen. Wie bereits erwähnt, können transmissive Elemente (z.B. optische Fenster oder Linsen) auch zweiseitig gekühlt werden, wofür beispielsweise eine zweifache Expansion möglich ist.

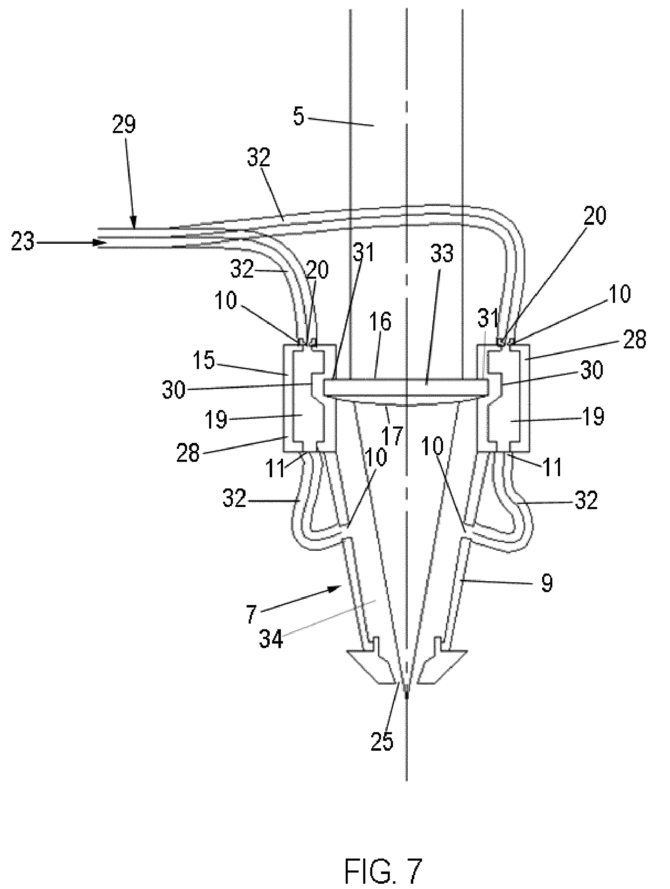

In Fig. 7 ist die Düsenanordnung 7 eines in Form eines Laserschneidkopfes ausgebildeten Laserbearbeitungskopfes 1 gezeigt. Der Laserschneidkopf unterscheidet sich im Wesentlichen nur im Bereich der Düsenanordnung 7 von dem vorher beschriebenen Laserschweißkopf, wobei zur Vermeidung unnötiger Wiederholungen auf die dortigen Ausführungen Bezug genommen wird. Demnach ist eine Fokussierlinse 33 zur Fokussierung des austretenden Laserstrahls 5 vorgesehen, ab welcher die sich bis zur Düse 9 erstreckende Düsenanordnung 7 beginnt. Die Fokussierlinse 33 dient als Partikelsperre bezüglich in die Düse 9 eintretender Partikel. Eine aktive Kühlung der Fokussierlinse 33 kann durch die Kühleinrichtung 15 erreicht werden, die analog zu der in Zusammenhang mit Fig. 4 beschriebenen Kühleinrichtung 15 des Transmissionsfensters 12 aufgebaut ist. Um unnötige Wiederholungen zu vermeiden, wird auf die dortigen Ausführungen Bezug genommen.

Wie in Fig. 7 gezeigt, umfasst die Gasführung 29 Gasleitungen 32, welche die Kühleinrichtung 15 der Fokussierlinse 33 mit einem Gaseinlass 10 an der Düse 9 strömungstechnisch in Serie miteinander verbinden, wobei der Gasstrom 23 zunächst der Kühleinrichtung 15 der Fokussierlinse 33 und anschließend dem Gaseinlass 10 der Düse 9 zugeführt wird. Der Gasstrom 23 tritt in den so genannten Kesselraum 34 der Düse 9 ein und wird dort, da die Fokussierlinse 33 die Düse 9 nach innen gasdicht verschließt, koaxial zum Laserstrahl 5 durch die Düsenöffnung 25 abgegeben. In der praktischen Anwendung trifft der aus der Düse 9 austretende Gasstrom 23 mit Überdruck gegenüber Umgebung auf die Bearbeitungsstelle und dient als Schnittfugenstrahl zum Entfernen der Schlacke aus der Schnittfuge.

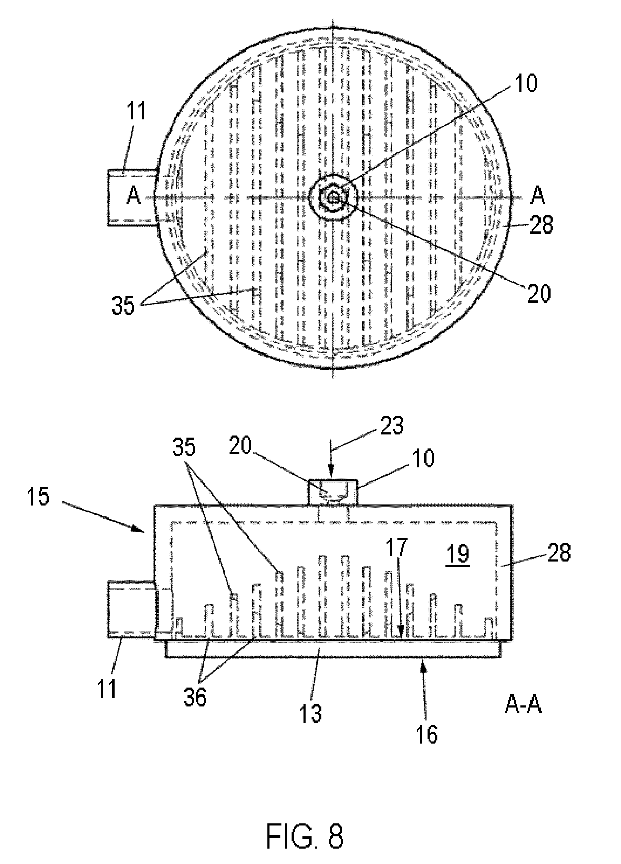

In Fig. 8 ist anhand von schematischen Darstellungen ein weiteres Ausführungsbeispiel einer Kühleinrichtung 15 an einem Spiegel veranschaulicht. Um unnötige Wiederholungen zu vermeiden, werden lediglich die Unterschiede zu der in Fig. 6 gezeigten Kühleinrichtung 15 beschrieben und ansonsten wird auf die dortigen Ausführungen verwiesen. In der oberen Abbildung von Fig. 8 ist eine Aufsicht auf die Kühleinrichtung 15 gezeigt. Die untere Abbildung von Fig. 8 zeigt einen Schnitt gemäß der in der oberen Abbildung eingezeichneten Schnittlinie A-A.

Demnach hat die Kühleinrichtung 15 wie der Spiegel 13 in der Aufsicht eine runde Form. Der Gaseinlass 10 befindet sich etwa mittig der Kühleinrichtung 15. Der Gasauslass 11 ist an der seitlichen Wandung 28 angeordnet. Eine Oberfläche 16 des Spiegels 13 ist Teil der Wandung 28, welche die Expansionskammer 19 umgrenzt. Innerhalb der Expansionskammer 19 befinden sich mehrere Kühlkörper 35, die hier beispielsweise jeweils rippenförmig ausgebildet und parallel nebeneinander angeordnet sind. Die Kühlkörper 35 verfügen jeweils über eine Kühlkörperbasis 36, mit der die Kühlkörper 35 direkten Berührungskontakt zum Spiegel 13 haben, wodurch eine gute Wärmeleitfähigkeit erzielt wird. Durch die Kühlkörper 35 wird die vom Gasstrom umströmte Oberfläche vergrößert, so dass eine effiziente Kühlung des Spiegels 13 erreicht wird. Vorteilhaft bestehen die Kühlkörper 35 aus einem Material, das besser wärmeleitfähig ist, als das Material der übrigen Bestandteile der Kühleinrichtung 15. Beispielsweise bestehen die Kühlkörper 35 zu diesem Zweck aus einem metallischen Material und die übrigen Bestandteile der Kühleinrichtung 15 aus einem nicht-metallischen Material, beispielsweise Kunststoff. Hierdurch kann eine besonders effiziente Kühlung des Spiegels 13 erzielt werden.

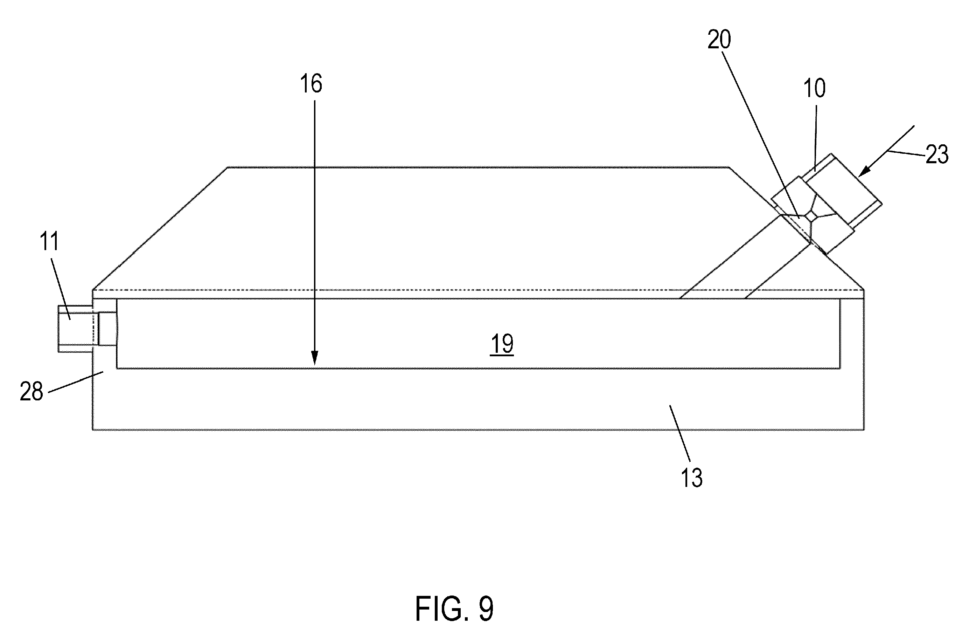

In Fig. 9 ist anhand einer schematischen Darstellung ein weiteres Ausführungsbeispiel einer Kühleinrichtung 15 an einem Spiegel 13 veranschaulicht. Um unnötige Wiederholungen zu vermeiden, werden lediglich die Unterschiede zu der in Fig. 6 gezeigten Kühleinrichtung 15 beschrieben und ansonsten wird auf die dortigen Ausführungen verwiesen. In dem Ausführungsbeispiel von Fig. 9 sind der Gaseinlass 10 sowie die Drossel 20 schräg (in einem von 90° verschiedenen Winkel) zur Rückfläche 17 des Spiegels 13 an der Wandung 28 angeordnet, d.h. die Drossel 20 mündet schräg in die Expansionskammer 19. Dies hat zur Folge, dass sich keine relativ unbewegte Gaszone ("Totwasserzone") über der Rückfläche 17 des Spiegels 13 bildet und der Spiegel 13 somit besonders effizient gekühlt werden kann.

Wie sich aus vorstehender Beschreibung ergibt, stellt die Erfindung einen Laserbearbeitungskopf und ein Verfahren zum Betreiben eines Laserbearbeitungskopfes zur Verfügung, wobei Arbeitsgas, das als Schnittfugengas zum Entfernen der Schlacke aus einer Schnittfuge bzw. als Crossjet vorgesehen ist, erstmalig auch zur Kühlung eines oder mehrerer optischer Bauteile eingesetzt wird. Die Erfindung macht sich hierbei die kühlende Wirkung eines gedrosselten Gasstroms zunutze. In vorteilhafter Weise kann hierdurch die Anzahl der fluiden Medien im Laserbearbeitungskopf reduziert werden, wodurch die Komplexität, der benötigte Bauraum sowie die Herstell- und Betriebskosten vermindert werden. Zudem verringert sich die Ausfallwahrscheinlichkeit des Laserbearbeitungskopfes.

Bezugszeichenliste

| | |
|---|---|
| 1 | Laserbearbeitungskopf |
| 2 | Gehäuse |
| 3 | Halterung |
| 4 | Eintrittsöffnung |
| 5 | Laserstrahl |
| 6 | Strahlführung |
| 7 | Düsenanordnung |
| 8 | Düsenrohr |
| 9 | Düse |
| 10 | Gaseinlass |
| 11 | Gasauslass |
| 12 | Transmissionsfenster |
| 13 | Spiegel |
| 14 | Strahlengang |
| 15 | Kühleinrichtung |
| 16 | Vorderfläche |
| 17 | Rückfläche |
| 19 | Expansionskammer |
| 20 | Drossel |
| 21 | Werkstück |
| 22 | Partikel |
| 23 | Gasstrom |
| 24 | Schweißnaht |
| 25 | Düsenöffnung |
| 26 | erste Kammeröffnung |
| 27 | zweite Kammeröffnung |
| 28 | Wandung |
| 29 | Gasführung |
| 30 | Einsenkung |
| 31 | Randbereich |
| 32 | Gasleitung |
| 33 | Fokussierlinse |
| 34 | Kesselraum |
| 35 | Kühlkörper |
| 36 | Kühlkörperbasis |

**Patentansprüche**

1. Laserbearbeitungskopf (1) zur trennenden und/oder fügenden Bearbeitung von Werkstücken (21) mittels eines Laserstrahls (5), umfassend:

   eine Düsenanordnung (7) mit einer Düse (9) zum Abgeben des Laserstrahls (5), eine Strahlführung (6) zum Führen des Laserstrahls (5) zur Düse (9), wobei die Strahlführung (6) mindestens ein optisches Bauteil (12, 13, 33) zur Transmission und/oder Reflexion des Laserstrahls (5) aufweist, eine Gasführung (29), zum Führen eines Gasstroms (23) zur Düsenanordnung (7), welche so ausgebildet ist, dass der Gasstrom (23) in die Düsenanordnung (7) eingeleitet werden kann, mindestens eine Kühleinrichtung (15), die an die Gasführung (23) gasleitend angeschlossen ist und mindestens eine Drossel (20)zur Drosselung des Gasstroms (23) aufweist, wobei die Kühleinrichtung (15) so ausgebildet ist, dass das mindestens eine optische Bauteil (12, 13, 33) durch den gedrosselten Gasstrom (23) kühlbar ist.

2. Laserbearbeitungskopf (1) nach Anspruch 1, bei welchem mindestens eine Kühleinrichtung (15) und die Düsenanordnung (7) in Serie gasleitend miteinander verbunden sind, wobei die mindestens eine Kühleinrichtung (15) stromaufwärts der Düsenanordnung (7) angeordnet ist.

3. Laserbearbeitungskopf (1) nach Anspruch 1 oder 2, bei welchem eine Mehrzahl Kühleinrichtungen (15) vorgesehen sind, wobei die Kühleinrichtungen (15) gasleitend in Serie miteinander verbunden sind.

4. Laserbearbeitungskopf (1) nach einem der Ansprüche 1 bis 3, bei welchem an jedem optischen Bauteil (12, 13, 33)eine separate Kühleinrichtung (15) zu dessen Kühlung angeordnet ist.

5. Laserbearbeitungskopf (1) nach einem der Ansprüche 1 bis 4, bei welchem mindestens eine Kühleinrichtung (1) so ausgebildet ist, dass der gedrosselte Gasstrom (23) mindestens eine Oberfläche (16, 17) eines optischen Bauteils (12, 13, 33) und/oder mindestens eines mit einem optischen Bauteil (12, 13, 33) wärmeleitend verbundenen Kühlkörpers (35), insbesondere schräg, direkt und/oder indirekt anströmt.

6. Laserbearbeitungskopf (1) nach einem der Ansprüche 1 bis 5, bei welchem mindestens eine Kühleinrichtung (15) mindestens eine Expansionskammer (19) zum Aufnehmen des gedrosselten Gasstroms (23) aufweist, wobei zumindest ein Abschnitt einer Wandung (28) der Expansionskammer (19) durch eine Oberfläche (17) eines optischen Bauteils (13) und/oder mindestens eines mit dem optischen Bauteil (13) wärmeleitend verbundenen Kühlkörpers (35)gebildet wird.

7. Laserbearbeitungskopf (1) nach einem der Ansprüche 1 bis 5, bei welchem mindestens eine Kühleinrichtung (15) mindestens eine Expansionskammer (19) zum Aufnehmen des gedrosselten Gasstroms (23) aufweist, wobei zumindest ein Abschnitt einer Wandung (28) der Expansionskammer (19) mit mindestens einer Oberfläche (16, 17) eines optischen Bauteils (13) wärmeleitend verbunden ist.

8. Laserbearbeitungskopf (1) nach einem der Ansprüche 6 oder 7, bei welchem die Expansionskammer (19) mindestens einen Gaseinlass (10) zum Einleiten des Gasstroms (23) in die Expansionskammer (19) und mindestens einen Gasauslass (11) zum Ausleiten des Gasstroms (23) aus der Expansionskammer (19) aufweist, wobei mindestens eine Drossel (20) so angeordnet ist, dass der gedrosselte Gasstrom (23) direkt in die Expansionskammer (19) expandieren kann.

9. Laserbearbeitungskopf (1) nach einem der Ansprüche 1 bis 8, bei welchem mindestens eine Kühleinrichtung (15) so ausgebildet ist, dass ein optisches Bauteil (12, 33) an zwei einander gegenüberliegenden (Bauteil-)Oberflächen (16, 17) kühlbar ist.

10. Laserbearbeitungsmaschine mit einer Laserstrahlquelle zur Erzeugung eines Laserstrahls (5) und einer Gasstrahlquelle zur Erzeugung eines Gasstroms (23), sowie einem Laserbearbeitungskopf (1) nach einem der Ansprüche 1 bis 9.

11. Verfahren zum Betreiben eines Laserbearbeitungskopfes (1) zur trennenden und/oder fügenden Bearbeitung von Werkstücken (21) mittels eines Laserstrahls (5), welches die folgenden Schritte umfasst:

Erzeugen des Laserstrahls (5),
Führen des Laserstrahls (5) mittels einer Strahlführung (6), die mindestens ein optisches Bauteil (12, 13, 33) zur Transmission und/oder Reflexion des Laserstrahls (5) aufweist, zu einer Düse (9) zum Abgeben des Laserstrahls (5),
Erzeugen eines Gasstroms (23),
Drosseln des Gasstroms (23) und Kühlen des optischen Bauteils (12, 13, 33) durch den gedrosselten Gasstrom,

Einleiten des Gasstroms (23) in die Düsenanordnung (7).

12. Verfahren nach Anspruch 11, bei welchem der zur Kühlung eines oder mehrerer optischer Bauteile (12, 13, 33) ein- oder mehrfach gedrosselte Gastrom (23) in die Düsenanordnung (7) eingeleitet wird.

13. Verfahren nach Anspruch 11 oder 12, bei welchem der an einem optischen Bauteil (12) gedrosselte Gasstrom (23) an einem oder mehreren weiteren optischen Bauteilen (13, 33) zu deren Kühlung jeweils wieder gedrosselt wird.

14. Verfahren nach einem der Ansprüche 11 bis 13, bei welchem der gedrosselte Gasstrom (23) eine Oberfläche (17) eines optischen Bauteils, und/oder mindestens eines mit einem optischen Bauteil (13) wärmeleitend verbundenen Kühlkörpers(35), insbesondere schräg, direkt und/oder indirekt anströmt.

15. Verwendung eines Gasstroms (23), der zum Einleiten in eine Düsenanordnung (7) eines Laserbearbeitungskopfes (1) zur trennenden oder fügenden Bearbeitung von Werkstücken (21) mittels Laserstrahl (5) vorgesehen ist, zur Kühlung mindestens eines optischen Bauteils (12, 13, 33) zur Führung des Laserstrahls (5).

FIG. 1

FIG. 2

FIG. 3

EP 3 257 616 A1

FIG. 4

14

6 bar

5 bar

4 bar

3 bar

1,5 bar

2 bar

FIG. 5

FIG. 6

EP 3 257 616 A1

FIG. 7

FIG. 8

FIG. 9

Europäisches
Patentamt
European
Patent Office
Office européen
des brevets

**EUROPÄISCHER RECHERCHENBERICHT**

Nummer der Anmeldung

EP 16 17 5155

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Stefan Hunze: In: "Reduzierung der Auswirkungen der thermisch induzierten Fokusverschiebung durch transmittierende optische Elemente", 20. Januar 2015 (2015-01-20), XP055292614, Seiten 1-178, | 1,4,5, 9-12,15 | INV. B23K26/70 B23K26/142 |
| A | * Seite 12, Zeile 25 - Zeile 28; Abbildung 2.6 * <br> * Seite 32 - Seite 33 * <br> * Seite 5 - Seite 6 * <br> ----- | 2,3,13, 14 | |
| X | US 2012/037604 A1 (SHIKATA KATSUYA [JP]) 16. Februar 2012 (2012-02-16) | 1,2,5-8, 10-12, 14,15 | |
| A | * Absätze [0003], [0004], [0017], [0018], [0023], [0074], [0096], [0098]; Abbildungen 4,6 * <br> ----- | 3,4,9,13 | |
| A | EP 1 459 835 B1 (TRUMPF WERKZEUGMASCHINEN GMBH [DE]) 24. April 2013 (2013-04-24) * das ganze Dokument * <br> ----- | 1-14 | RECHERCHIERTE SACHGEBIETE (IPC) <br><br> B23K |

Der vorliegende Recherchenbericht wurde für alle Patentansprüche erstellt

| Recherchenort | Abschlußdatum der Recherche | Prüfer |
|---|---|---|
| München | 3. August 2016 | Seiderer, Jens |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 17 5155

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2016

| Im Recherchenbericht angeführtes Patentdokument | Datum der Veröffentlichung | Mitglied(er) der Patentfamilie | Datum der Veröffentlichung |
|---|---|---|---|
| US 2012037604 A1 | 16-02-2012 | CN 102369080 A<br>JP 5418588 B2<br>US 2012037604 A1<br>WO 2010113244 A1 | 07-03-2012<br>19-02-2014<br>16-02-2012<br>07-10-2010 |
| EP 1459835 B1 | 24-04-2013 | EP 1459835 A1<br>US 2005109745 A1 | 22-09-2004<br>26-05-2005 |

EPO FORM P0461

Für nähere Einzelheiten zu diesem Anhang : siehe Amtsblatt des Europäischen Patentamts, Nr.12/82